# EUROPÄISCHE PATENTSCHRIFT

(11) **EP 1 660 793 B1**
(45) Veröffentlichungstag und Bekanntmachung des Hinweises auf die Patenterteilung: **26.12.2007**
(21) Anmeldenummer: 04762748.4
(22) Anmeldetag: 02.09.2004
(51) Int. Cl.: F16J 9/20

(54) **ÖLABSTREIFRING FÜR KOLBEN VON VERBRENNUNGSMOTOREN**
OIL SCRAPER RING FOR PISTONS OF INTERNAL COMBUSTION ENGINES
SEGMENT RACLEUR D'HUILE DESTINE A DES PISTONS DE MOTEURS A COMBUSTION INTERNE

(30) Priorität: 02.09.2003 DE 10340301
(43) Veröffentlichungstag der Anmeldung: 31.05.2006
(73) Patentinhaber: MAHLE GMBH, D-70376 Stuttgart (DE)
(72) Erfinder: FIEDLER, Rolf-Gerhard, 73240 Wendlingen (DE)
(74) Vertreter: Pohle, Reinhard
(86) Internationale Anmeldenummer: PCT/DE2004/001962
(87) Internationale Veröffentlichungsnummer: WO 2005/024278

(56) Entgegenhaltungen:
- FR-A- 2 723 401
- PATENT ABSTRACTS OF JAPAN Bd. 1998, Nr. 01, 30. Januar 1998 (1998-01-30) -& JP 09 257130 A (NISSAN MOTOR CO LTD), 30. September 1997 (1997-09-30)
- PATENT ABSTRACTS OF JAPAN Bd. 016, Nr. 239 (M-1258), 2. Juni 1992 (1992-06-02) -& JP 04 050554 A (NIPPON PISTON RING CO LTD), 19. Februar 1992 (1992-02-19)

## Beschreibung

Die Erfindung betrifft einen Ölabstreifring für Kolben von Verbrennungsmotoren, bestehend aus einer Lamelle, deren Lauffläche eine ballig asymmetrische Form mit einer über den Umfang der Lamelle erstreckenden Scheitelpunktlinie aufweist, wobei die Lamelle in einer Ringnut des Kolbens mit einer jeweils zueinander parallel angeordneten kolbenbodenseitig abgewandten und kolbenbodenseitig zugewandten Ringnutflanke angeordnet ist.

Um zu verhindern, dass zuviel Motoröl in den Brennraum gelangt, was neben einem hohen Ölverbrauch auch negative Auswirkungen auf das Emissionsverhalten des Motors zur Folge hat, ist eine ausreichende Tangentialkraft der Ölabstreifringe zur Erzeugung einer radialen Anpressung an die Zylinderwand und damit einer guten Ölabstreifwirkung notwendig. Das bewirkt jedoch eine hohe Flächenpressung an den Laufflächen der Lamellen und damit auch eine hohe Reibleistung im Motorbetrieb. Diese Reibleistung verschlechtert den Wirkungsgrad des Verbrennungsmotors und erhöht demzufolge den Kraftstoffverbrauch. Die Auslegung der Tangentialkraft der Ölabstreifringe ist deshalb immer ein Kompromiss zwischen minimaler Reibleistung und maximaler Ölabstreifwirkung. Sämtliche Maßnahmen zur Verminderung der Reibleistung im motorischen Betrieb ohne Reduzierung der Tangentialkraft erleichtern somit die Auslegung der Ölabstreifringe bzw. verbessern den Wirkungsgrad des Motors.

Dementsprechend wurde für gattungsgemäße Ölabstreifringe versucht, die Lauffläche der Lamelle derart zu formen, dass diese den vorgenannten Forderungen gerecht werden.

Asymmetrische Laufflächen von Ölabstreifringen bzw. Kolbenringen sind aus der DE 38 33 322 A1, DE 43 00 531 C1 oder DE 44 29 649 C2 bekannt. Ebenso ist aus der DE 33 05 385 C1 ein Kolbenring bekannt, der in einer Ringnut eines Kolbens angeordnet ist, dessen Ringnut-Seitenwände vorzugsweise parallel, aber schräg zur Kolbenachse verlaufen, um eine verbesserte Abdichtung zu gewährleisten. Schräg verlaufende parallel zueinander ausgerichtete Ringnut-Seitenwände sind auch aus dem japanischen Gebrauchsmuster 57-73340 bekannt. Diese vorgenannten Ausführungsformen sind jedoch auf Kompressionsringe bezogen, deren Anforderung hinsichtlich der Flächenpressung sehr niedrig ist, hingegen Ölabstreifringe hohe Flächenpressungen erfordern.

Aus der JP 04050554 A ist ein aus zwei Lamellen und einer speziell geformten Spreizfeder gebildeter Ölabstreifring bekannt, dessen Flanken konvergierend verlaufen, wodurch bei der Hin- und Herbewegung des Kolbens eine verbesserte Lageänderung der Lamellen erreicht werden soll.

Es ist Aufgabe der Erfindung, einen einteiligen Ölabstreifring für einen Kolben eines Verbrennungsmotors anzugeben, der gegenüber dem bekannten Stand der Technik eine verbesserte Ölabstreifwirkung bei reduzierter Reibung und einem reduzierten Verschleiß der Lauffläche aufweist.

Gelöst wird die Aufgabe durch die Merkmale des kennzeichnenden Teils des Anspruchs 1.

Die Lauffläche der Lamelle zeichnet sich durch eine asymmetrische Neigung mit einer gegenüber dem Stand der Technik stark reduzierten Balligkeit aus, wobei die Laufflächenkontur näherungsweise durch ein Polynom 2. Ordnung beschrieben werden kann.

Durch die erfindungsgemäße Laufflächen- und Flankengestaltung der Lamelle in der Ringnut wird durch eine günstigere hydrodynamische Bedingung an der Lamelle eine Verminderung der Reibleistung des Ölabstreifrings ohne eine Reduzierung der Tangentialkraft erreicht, wobei die ölabstreifende Funktion der Lamelle hierbei in vollem Umfang erhalten bleibt. Die Reduzierung der Reibleistung bewirkt eine Verbesserung des Wirkungsgrades des Motors oder es kann durch eine Erhöhung der Tangentialkraft bei unverändertem Reibleistungsniveau das Ölabstreifverhalten verbessert werden.

Zweckmäßige Ausgestaltungen der Erfindung sind Gegenstand der Unteransprüche.

Ein Ausführungsbeispiel der Erfindung wird im Folgenden anhand der einzigen Zeichnung beschrieben. Es zeigt die
Fig. einen Querschnitt des erfindungsgemäßen Ölabstreifringes in einer Ringnut eines Kolbens.

Wie aus der Figur ersichtlich, ist eine Lamelle 1 in einer Ringnut 7 mit einer zum Kobenboden weisenden Ringnutflanke 5 und einer vom Kolbenboden weg weisenden Ringnutflanke 6 eines Kolbens angeordnet. Erfindungsgemäß weist die Lamelle 1 eine ballig asymmetrische geformte Lauffläche h mit einer über den Umfang der Lamelle erstreckende Scheitelpunktlinie 3 auf, wobei die Scheitellinie 3 als in Kontakt zur Zylinderwand 8 stehende Kante zum Ölabstreifen wirkt. Im Ausführungsbeispiel ist die Lamelle 1 im montierten Zustand im Kolben derart angeordnet, dass die Scheitelpunktlinie 3 der Lauffläche h zur kolbenbodenseitig abgewandten Ringnutflanke 6 hin angeordnet ist.

Die Lamelle 1 weist Lamellenflanken 2 und 2' auf, die nach radial außen bis zur Lauffläche h unter einem Winkel α derart zueinander konvergierend verlaufen, dass bei der Anlage der Flanke 2 an die kolbenbodenseitig zugewandte Ringnutflanke 5 die Lamelle nur mit der Scheitelpunktlinie 3 in Kontakt mit der Zylinderwand 8 des Motors steht. Dabei entsteht ein Winkel zwischen der bodenseitig abgewandeten Ringnutflanke 6 und der Lamellenflanke 2' von vorzugsweise 3° bis 5° Grad. Die sich nach radial innen erstreckenden Lamellenflanken 2 und 2' sind mit einer Endfläche E verbunden, wobei durch die Endfläche Tangentialpunkte T erzeugt werden, die den Drehpunkt der Lamelle entsprechend der Hubbewegung des Kolbens bilden. Wie in der Figur dargestellt, kann die gesamte Endfläche E halbkreisförmig ausgebildet sein. Eine beliebig geformte Endfläche ist möglich, solange die Endfläche unmittelbar am Drehpunkt halbkreisförmig ausgebildet ist. Die axiale Ausdehnung der Endfläche entspricht im wesentlichen der Höhe H der Ringnut 7, wobei das Einsetzen der Lamelle in die Ringnut 7 noch ermöglicht wird.

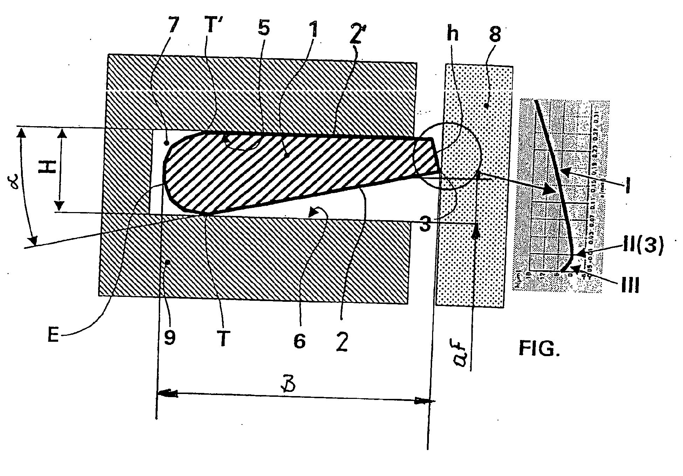

Bei einer Anlage der Lamellenflanken 2, 2' an die kolbenbodenseitig abgewandte Ringnutflanke 6 tritt die Lamelle 1 nur mit einem ersten Abschnitt (i) der Lauffläche (h) mit der Zylinderwand in Kontakt. Erfindungsgemäß hat die Lauffläche h der Lamelle eine Form, die einem Einlaufvorgang von mehreren hundert Stunden im Motorbetrieb entspricht. Diese ist dadurch charakterisiert, dass die Lauffläche h im Querschnitt in einem ersten Abschnitt (I) der asymmetrischen Form einem Polynom 2. Ordnung mit h(x)= ax + bx² folgt, wobei x= Laufflächenkoordinate im kartesischen Koordinatensystem in mm ist und a, b Koeffizienten, mit a definiert durch das Verhältnis des axialen Flankenspiels aF der Lamellen zur Breite B der Lamellen; aF = Abstand zwischen Ringnutflanke und Lamelle, gemessen am Außendurchmesser der Ringnut (s. Figur), B = Gesamtbreite = radiale Breite der Lamelle; b definiert als Betrag der Laufflächenkrümmung; einem als Kante 3 ausgeführten tragenden Scheitel (II) h(x=0), und in einem dritten Abschnitt (III) der asymmetrischen Form der Funktion h(x)= cx² , mit c als einem Vielfachen von b, folgt. Als Beispiel für Lamellen mit einer Dicke von 0,4 mm ergibt sich ein Wert h(x)= 35x + 50x². Damit sind die entsprechend Fig. 1 und 2 dargestellten Querschnittskurven mit x als Laufflächenkoordinate in mm und h(x) als Balligkeit in µm erzielbar. Es ist verständlich, dass die Koeffizienten dieses Polynoms auf die spezifische Anwendung abzustimmen sind, wobei wesentliche Parameter hierbei der Zylinderdurchmesser, die Abmessungen des Lamellenquerschnittes und die axialen Spielverhältnisse des eingebauten Ölabstreifringes in der Ringnut sind. Die typische Balligkeit der Lauffläche h nach der Erfindung beträgt erfindungsgemäß ca. 2 bis 10 µm/0,4 mm gegenüber den Ausführungen nach dem Stand der Technik von 3 bis 15 µm/0,15 mm.

Funktionell ist die erfindungsgemäß verbesserte Ölabstreifwirkung dadurch gegeben, dass die an der Lauffläche h der Lamelle in Zylinderachsrichtung angreifende Reibkraft ein Drehmoment erzeugt, welches die Lamelle tellerförmig verwölbt. Dies ist möglich, weil die Gestaltung der Lamellenflanken 2 und 2' eine Bewegung der Lamelle in axialer Richtung vor allem an der inneren Auflage behindert, wohingegen an der äußeren Auflage deutlich größere axiale Bewegungsamplituden möglich sind.

Die Reibkraft und damit das Drehmoment wechselt abhängig von der Hubrichtung des Kolbens das Vorzeichen. Da die Höhe der Reibkraft noch geschwindigkeitsabhängig ist, hat dies ständige Änderungen der tellerförmigen Verwölbung zur Folge, bezeichnet als dynamisches Twisten. Durch das dynamische Twisten erzeugt die Lamelle, die bei der Hubbewegung weg vom Verbrennungsraum - dem Abwärtshuban der kolbenbodenseitig zugewandten Federnutflanke anliegt, in Kombination mit der asymmetrischen Neigung der Lauffläche eine gute Ölabstreifwirkung -"Kante" trägt-, während die jeweils andere Lage der Lamelle aufgrund der definierten Balligkeit der Lauffläche eine verbesserte Hydrodynamik beim Aufwärtshub aufweist -"Fläche" (Anschnitt I) trägt. Dadurch reduziert sich die Reibleistung an der Lamelle, welche in vertwistetem Zustand eine schlechtere Ölabstreifwirkung aufweist. Eine Änderung der Hubrichtung bewirkt ein Umklappen der Lamelle in die jeweils andere Lage.

Die lagerichtige Orientierung der Lamelle beim Einbau des Ölabstreifringes muss beachtet werden, die beispielsweise durch eine Farbmarkierung an der Lamellenflanke gewährleistet werden kann.

Die Herstellung der Laufflächenform- bzw. Kontur kann beispielsweise durch Läppen erfolgen.

### Bezugszeichen

- 1: Lamelle, Ölabstreifring
- 2, 2': Lamellenflanken
- 3: Scheitelpunktlinie (Kante)
- 5: kolbenbodenseitig zugewandte Ringnutflanke
- 6: kolbenbodenseitig abgewandte Ringnutflanke
- 7: Ringnut
- 8: Zylinderwand
- 9: Kolben
- E: Endfläche
- h: Lauffläche
- H: Höhe der Ringnut
- T: Tangentialpunkt
- B: Gesamtbreite = radiale Breite der Lamelle

## Patentansprüche

1. Ölabstreifring für Kolben von Verbrennungsmotoren, bestehend aus einer Lamelle (1), deren Lauffläche (h) eine ballig asymmetrische Form mit einer über den Umfang der Lamelle erstreckenden Scheitelpunktlinie (3) aufweist, wobei die Lamelle (1) im montierten Zustand des Ölabstreifrings (1) im Kolben in einer Ringnut (7) des Kolbens mit einer jeweils zueinander parallel angeordneten kolbenbodenseitig abgewandten (6) und kolbenbodenseitig zugewandten Ringnutflanke (5) angeordnet ist,
**dadurch gekennzeichnet,**
**dass** die Lamellenflanken (2, 2') nach radial außen bis zur Lauffläche (h) unter einem Winkel (α) derart zueinander konvergierend verlaufen, dass im montierten Zustand des Ölabstreifrings (1) im Kolben bei der Anlage einer der Flanken an die kolbenbodenseitig zugewandte Ringnutflanke (5) die Lamelle nur mit der Scheitelpunktlinie (3) in Kontakt mit der Zylinderwand (8) steht und bei Anlage einer der Lamellenflanken an die kolbenbodenseitig abgewandte Ringnutflanke (6) die Lamelle nur mit einem ersten Abschnitt (I) der Lauffläche (h) mit der Zylinderwand in Kontakt steht, wobei die Lauffläche (h) der Lamelle (1) im Querschnitt
- in einem ersten Abschnitt (I) der asymmetrischen Form einem Polynom 2. Ordnung mit h(x)= ax + bx² folgt, wobei
x= Laufflächenkoordinate im kartesischen Koordinatensystem in mm ist und a, b Koeffizienten, mit a definiert durch das Verhältnis des axialen Flankenspiels (aF) der Lamellen zur Breite (B) der Lamellen; b definiert als Betrag der Laufflächenkrümmung;
- einem als Kante ausgeführten tragenden Scheitel (II) h(x=0), und
- in einem dritten Abschnitt (III) der asymmetrischen Form der Funktion h(x)= cx² , mit c als einem Vielfachen von b, folgt.

2. Ölabstreifring nach Anspruch 1, **dadurch gekennzeichnet, dass** im montierten Zustand des Ölabstreifrings (1) im Kolben die Scheitelpunktlinie (3) der Lauffläche (h) zur kolbenbodenseitig abgewandten Ringnutflanke (6) hin angeordnet ist.

3. Ölabstreifring nach Anspruch 1 und 2, **dadurch gekennzeichnet**, das die in der Ringnut (7) nach radial innen erstreckenden Lamellenflanken (2, 2') mittels einer Endfläche (E) verbunden sind, welche Tangentialpunkte (T) für eine Drehbewegung der Lamelle entsprechend der Hubbewegung des Kolbens ausbildet.

## Claims

1. Oil scraper ring for pistons of internal combustion engines, comprising a lamella (1), the working surface (h) of which has a spherically asymmetrical shape with a vertex line (3) extending over the circumference of the lamella, wherein the lamella (1), in the assembled state of the oil scraper ring (1) in the piston, is arranged in an annular groove (7) of the piston with an annular groove wall (6) facing away from the piston crown side and an ring groove wall (5) facing the piston crown side, which are disposed parallel to one another,
**characterised in that**
the lamella walls (2, 2') run radially outwards up to the working surface (h), at an angle (α), converging towards one another in such a manner that, in the assembled state of the oil scraper ring (1) in the piston, when one of the walls makes contact with the ring groove wall (5) that faces the piston crown side, the lamella is in contact with the cylinder wall (8) of the engine only with the vertex line (3), and when one of the lamella walls makes contact with the ring groove wall (6) that faces away from the piston crown side, the lamella is in contact with the cylinder wall only with the first segment (I) of the working surface (h), wherein the working surface (h) of the lamella (1), in cross-section,
- follows the asymmetrical shape of a polynomial of the second order in a first segment (I), with h(x)=ax+bx², wherein
x = working surface coordinates in the Cartesian coordinate system in mm, and a, b are coefficients, with a being defined by the ratio of the axial wall play (aF) of the lamellae relative to the width (B) of the lamellae; b being defined as the extent of the working surface curvature;
- follows a supporting vertex (II) h(x=0) configured as an edge, and
- in a third segment (III) follows the asymmetrical shape of the function h(x)=cx² , with c as a multiple of b.

2. Oil scraper ring according to claim 1, **characterised in that** in the assembled state of the oil scraper ring (1) in the piston, the vertex line (3) of the working surface (h) is disposed towards the annular groove wall (6) that faces away from the piston crown side.

3. Oil scraper ring according to claim 1 and 2, **characterised in that** the lamella walls (2, 2'), which extend radially inwards in the ring groove (7), are connected by means of an end surface (E), which forms tangential points (T) for a rotary movement of the lamella, corresponding with the stroke movement of the piston.

## Revendications

1. Segment racleur d'huile destiné à des pistons de moteurs à combustion interne, constitué d'une lamelle (1), dont la portée (h) présente une forme asymétrique bombée avec une ligne de sommet (3) s'étendant sur le pourtour de la lamelle, la lamelle (1), dans l'état de montage du segment racleur d'huile (1) dans le piston, étant disposée dans une gorge annulaire (7) du piston avec un flanc (5) tourné du côté fond de piston et un flanc (6) opposé du côté fond de piston, disposés parallèlement entre eux,
**caractérisé en ce que**
les flancs de lamelles (2, 2') s'étendent en convergence mutuelle dans la direction radiale extérieure jusqu'à la portée (h) sous un angle (α), de telle sorte que, dans l'état de montage du segment racleur d'huile (1) dans le piston, lors de l'appui de l'un des flancs sur le flanc de gorge annulaire (5) tourné du côté fond de piston, la lamelle n'est au contact de la paroi de cylindre (8) que par la ligne de sommet (3) et que, lors de l'appui de l'un des flancs de lamelle sur le flanc de gorge annulaire (6) opposé du côté fond de piston, la lamelle n'est au contact de la paroi du cylindre que par une première section (I) de la portée (h), la portée (h) de la lamelle (1) en coupe transversale obéissant
- dans une première section (I) de forme asymétrique à un polynôme du deuxième degré avec h(x) = ax + bx², où x = des coordonnées de portées dans le système de coordonnées cartésien en mm et a, b des coefficients, avec a défini par le rapport du jeu de flanc axial (aF) des lamelles sur la largeur (B) des lamelles ; b défini en tant que valeur du cintrage des portées ;
- à un sommet porteur (II) h(x = 0), réalisé sous forme d'arête, et
- dans une troisième section (III) de forme asymétrique à la fonction h(x) = cx², avec c en tant qu'un multiple de b.

2. Segment racleur d'huile suivant la revendication 1, **caractérisé en ce que**, dans l'état de montage du segment racleur d'huile (1) dans le piston, la ligne de sommet (3) de la portée (h) est disposée en direction du flanc de gorge annulaire (6) opposé du côté fond de piston.

3. Segment racleur d'huile suivant les revendications 1 et 2, **caractérisé en ce que** les flancs de lamelles (2, 2'), s'étendant radialement vers l'intérieur dans la gorge annulaire (7), sont reliés au moyen d'une surface d'extrémité (E), qui réalise des points tangentiels (T) pour un mouvement de rotation de la lamelle en conformité avec le mouvement de course du piston.
